# EUROPEAN PATENT APPLICATION

(11) **EP 0 675 159 A1**
(43) Date of publication of application: **04.10.1995**
(21) Application number: 94113349.8
(22) Date of filing: 26.08.1994
(51) Int. Cl.: C08K 5/00, C08L 101/00, C08L 69/00, C08L 67/02

(54) **Ultraviolet light stabilized polymer compositions**

(30) Priority: 29.03.1994 US 219315
(71) Applicant: GENERAL ELECTRIC COMPANY, Schenectady, NY 12345 (US)
(72) Inventor: Guilland, Jean-Francois Henri, NL-4600 AC Bergen op Zoom (NL)
(74) Representative: Grever, Frederik

(57) **Abstract**

Hindered amine light stabilizers and ultraviolet absorbers are incorporated into polymer matrices to produce polymer compositions which unexpectedly display superior resistances to ultraviolet light.

## Description

### Field of the Invention

This invention relates to novel polymer compositions. More particularly, the polymer compositions comprise hindered amine light stabilizers as well as ultraviolet light absorbers and they unexpectedly display improved resistances to ultraviolet light.

### Background of the Invention

Thermoplastic resins and blends comprising the same are generally characterized by their many advantageous properties which include optical clarity, high ductility, high heat deflection as well as dimensional stability. As a result of such properties, they are often employed in many commercial applications.

While thermoplastic resins and blends possess the above-described advantageous properties, they, like many other organic polymeric materials, are susceptible to photodegradation by ultraviolet light. The photodegradation typically results in unfavorable characteristics including yellowing and erosion of the polymer/blend surface.

It is of increasing interest to prepare thermoplastic resins and blends prepared therefrom that are resistant to photodegradation. Such preparation conventionally employs treating the surface of the polymer/blend with a coating material, whereby the coating material typically contains ultraviolet light absorbing agents such as cyanoacrylate, benzophenone and benzotriazole derivatives.

It is often discovered, however, that the ultraviolet light absorbing agents, themselves, decompose upon exposure to ultraviolet light. This invariably leads to a degradation of the favorable properties of the polymer/blend which the agents are originally employed to protect.

The instant invention, therefore, is directed to novel polymer compositions that unexpectedly display improved resistances to ultraviolet light, wherein the novel polymer compositions comprise hindered amine light stabilizers and ultraviolet light absorbers.

### Detailed Description of the Prior Art

Efforts have been disclosed for preparing weatherable compositions. In commonly assigned U.S. Patent 5,214,085, hindered amine compounds characterized by the presence of cyclic hindered amino ether moieties are incorporated into coating compositions that may be employed as topcoats for polycarbonate substrates.

Additionally, in commonly assigned U.S. Patent 4,636,408, a polyphenylene ether resin is impregnated with a stabilizing composition comprising a hindered amine and a radiation absorber such as benzophenone.

The instantly claimed invention is patentably distinguishable from the above-described since, among other reasons, it is directed to novel polymer compositions that comprise hindered amine light stabilizers and ultraviolet light absorbers and they unexpectedly display improved resistances to ultraviolet light.

### Summary of the Invention

The instant invention is directed to novel polymer compositions that unexpectedly display improved resistances to ultraviolet light. Said polymer compositions comprise:
(a) at least one hindered amine;
(b) a bis-alkylene aminocyanoacrylate ester;
and
(c) a polymer selected from the group consisting of polycarbonates, polyesters, acrylics, acrylonitrile-butadiene-styrene copolymers, acrylonitrilestyrene copolymers, polyvinyl chloride, polystyrene, butyrates and polyethylene.

### Detailed Description of the Preferred Embodiments

A suitable hindered amine light stabilizer (hindered piperidyl ester) that may be employed in the instant invention has the formula 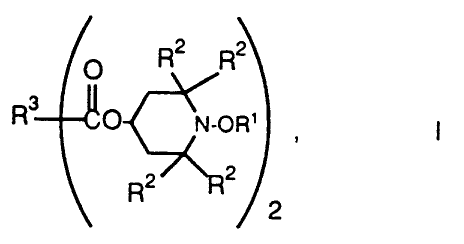
wherein R¹ is a C₄₋₁₂ alkyl, each R² is independently a C₁₋₅ primary alkyl and R³ is a C₄₋₁₂ alkylene.

Such hindered amine light stabilizers may be further characterized as cyclic hindered amino ether derivatives. In formula I, R¹ is preferably a primary alkyl such as n-butyl, n-pentyl, n-hexyl, n-octyl and n-decyl. R² is a C₁₋₄ primary alkyl (i.e., methyl, ethyl, n-propyl or n-butyl) with methyl being preferred and R³ is a C₄₋₁₂ alkylene radical including, for example, hexamethylene, octamethylene or decamethylene, with octamethylene being preferred. When R¹ is n-octyl, each R² is methyl and R³ is octamethylene, the compound represented by formula I has the IUPAC name of bis(1-octyloxy-2,2,6,6-tetramethyl-4-piperidinyl)sebacate and is commercially available.

The hindered amines employed in this invention are not generally considered to be radiation absorbing compounds since they typically do not absorb radiation in the ultraviolet or visible regions of the spectrum. Although the precise mechanism by which they operate is not known, it is believed that energy quenching and antioxidant (peroxide decomposition and alkyl radical termination) mechanisms are involved.

The bis-alkylene aminocyanoacrylate ester employed in this invention as an ultraviolet light absorbing agent is commercially available and may be represented by the formula 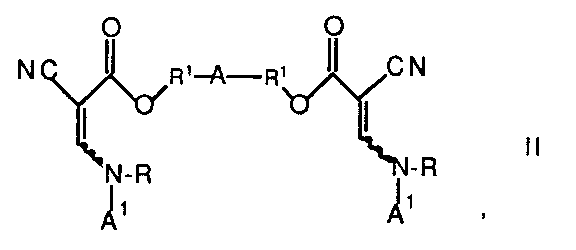
wherein A is a monocyclic or polycyclic alkane and preferably cyclohexane and each A¹ is independently a substituted or unsubstituted aromatic radical and preferably a phenyl group and each R is independently a C₁₋₅ alkyl group and preferably hydrogen and each R¹ is independently propylene or butylene and preferably methylene.

While it is preferred that the polymer compositions of the instant invention comprise polycarbonates, polyesters, acrylonitrile-butadiene-styrene copolymers and blends prepared therefrom; especially polycarbonate/polyester blends, there is no limitation with respect to the polymers that may be employed in the instant invention other than that they are compatible with the hindered amines and bis-alkylene aminocyanoacrylate ester. Therefore, it is also within the scope of this invention to include, for instance, in said compositions acrylic polymers such as poly(methyl methacrylate), acrylonitrile styrene copolymers, polyvinyl chloride, polystyrene, blends of polystyrene and polyphenylene ethers, butyrates and polyethylene and the like.

The preferred polycarbonates employed in the invention may comprise structural units of the formulae 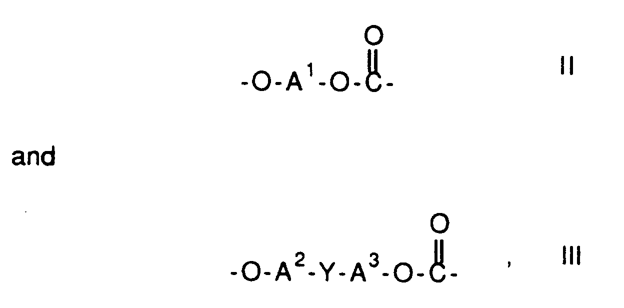
wherein III is a preferred subgenus of II and A¹ is a divalent substituted or unsubstituted aliphatic, alicyclic or aromatic radical, preferably -A²-Y-A³- wherein A² and A³ are each independently a monocyclic divalent aromatic radical. Y is a bridging radical in which 1 to 4 atoms separate A² from A³.

The A² and A³ values may be unsubstituted phenylene or substituted derivatives thereof, illustrative substituents (one or more) being alkyl, alkenyl, alkoxy and the like. Unsubstituted phenylene radicals are preferred. Both A² and A³ are preferably p-phenylene, although both may be o- or m-phenylene or one o- or m-phenylene and the other p-phenylene.

The bridging radical, Y, is one in which one or two atoms, preferably one, separate A² from A³. It is most often a hydrocarbon radical and particularly a saturated radical such as methylene, cyclohexylmethylene, 2-[2.2.1]-bicycloheptylmethylene, ethylene, isopropylidene, neopentylidene, cyclohexylidene, cyclopentadecylidene, cyclododecylidene or adamantylidene, especially a gemalkylene (alkylidene) radical. Also included, however, are unsaturated radicals and radicals which contain atoms other than carbon and hydrogen; for example, 2,2-dichloroethylidene, carbonyl, phthalidylidene, oxy, thio, sulfoxy and sulfone. For reasons of availability and particular suitability for the purposes of this invention, the preferred units of formula III are 2,2-bis(4-phenylene)propane carbonate units, which are derived from bisphenol A and in which Y is isopropylidene and A² and A³ are each p-phenylene.

The material represented by formula IV

HO-A¹-OH , IV

is the source of structural units of formula II above; A¹ is as previously defined.

Illustrative non-limiting examples of IV include:
2,2-bis(4-hydroxyphenyl)-propane (bisphenol A);
2,2-bis(3,5-dibromo-4-hydroxyphenyl)propane;
2,2-bis(3,5-dimethyl-4-hydroxyphenyl)propane;
1,1-bis(4-hydroxyphenyl)cyclohexane;
1,1-bis(3,5-dimethyl-4-hydroxyphenyl)cyclohexane;
1,1-bis(4-hydroxyphenyl)decane;
1,4-bis(4-hydroxyphenyl)propane;
1,1-bis(4-hydroxyphenyl)cyclododecane;
1,1-bis(3,5-dimethyl-4-hydroxyphenyl)cyclododecane;
4,4-dihydroxydiphenyl ether;
4,4-thiodiphenol;
4,4-dihydroxy-3,3-dichlorodiphenyl ether;
4,4-dihydroxy-3,3-dihydroxydiphenyl ether;
1,3 benzenediol; and
1,4-benzenediol.

Other useful dihydroxyaromatic compounds which are also suitable for use in the preparation of the above copolycarbonates are disclosed in U.S. Patents 2,999,835; 3,028,365; 3,334,154 and 4,131,575, all of which are incorporated herein by reference. The preferred bisphenol is 2,2-bis(4-hydroxyphenyl)propane (bisphenol A).

The polycarbonates (homopolycarbonates or copolycarbonates) employed in the instant invention may be straight chain or branched as well as graft polymers. They may be prepared, for instance, by reacting bisphenols with a carbonate source such as phosgene or dimethyl carbonate using conventional techniques. These include melt polymerization, interfacial polymerization and interfacial conversion with bischloroformate followed by polymerization. Chain termination agents such as phenol may also be employed.

The polyesters employed in the instant invention are poly(alkylene dicarboxylates) thus typically of the family consisting of polymeric glycol terephthalates or isophthalates and mixtures thereof including copolyesters of terephthalic and isophthalic acids. The preferred polyester employed in the instant invention is poly(1,4-butylene terephthalate).

Said polyesters may be prepared, for instance, by reacting a cis- or trans-isomer (or mixture thereof) of 1,4-cyclohexanedimethanol with a mixture of iso- and terephthalic acids. Such preparation is well known in the art and described in detail in U.S. Patent 2,901,466 and commonly assigned U.S. Patent 4,125,571, the disclosures of which are incorporated herein by reference.

Polycarbonate/polyester blends, for instance, employed in the instant invention can be prepared, for instance, in the melt. When melt mixing, pure polycarbonate and polyester pellets, for instance, may be added and mixed in a blending vessel at a temperature of about 290°C in order to obtain the desired blend. The weight ratio of polycarbonate to polyester may vary widely. It may, for example, be from about 99:1 to about 1:99, and is typically from about 90:10 to about 10:90 and preferably from about 75:25 to about 25:75.

Synthetic polymers such as the acrylonitrile-butadiene-styrene copolymers (ABS) that may be employed in this invention can be produced by grafting monomers onto a rubbery polymer backbone in a latex. In the case of ABS, acrylonitrile and styrene are frequently grafted onto rubbery polybutadiene and/or a rubbery styrene-butadiene copolymer in a latex. Prior to grafting, said latex of rubbery polybutadiene is generally admixed with the monomers to be grafted thereon and the mixture is usually agitated for a period of up to several hours to emulsify the monomers and to enable the rubbery polymer to absorb them before initiating the grafting reaction.

Typically, the above-mentioned rubbery backbone polymer is prepared via processes that subject, for instance, butadiene to catalysts of the alfin or amylsodium type. More typically, polybutadiene latices are produced by emulsion polymerization techniques that employ an aqueous emulsion of butadiene, an anionic emulsifier and a free radical initiator.

The ultraviolet light absorbing agent and hindered amine employed in the invention each independently comprise less than about 2.0% by weight but preferably less than about 1.0% by weight of the total weight of polymer in the composition. However, it is most preferred that said ultraviolet light absorbing agent and hindered amine each independently comprise less than about 0.6% by weight of the total weight of polymer in the composition.

It is also within the scope of the instant invention to include in said compositions conventional additives including, for example, thickening agents, pigments, dyes, stabilizers, impact modifiers and the like.

The following example illustrates and facilitates the production of the ultraviolet light stabilized polymer compositions of the instant invention. The molecular structure of the product may be confirmed by proton and carbon-13 nuclear magnetic resonance spectroscopy.

### Example

Ultraviolet light stabilized polymer composition granulates were prepared by mixing and extruding at 290°C 60.0 parts by weight of bisphenol A polycarbonate, 25.0 parts by weight of poly(1,4-butylene terephthalate), 10.0 parts by weight of methacrylate butadiene styrene terpolymer (MBS impact modifier), 0.3 parts by weight of octadecyl 3-(3,5-ditertiarybutyl-4-hydroxyphenol) propionate, 3.0 parts by weight of titanium dioxide, 0.5 parts by weight of bis(1-octyloxy-2,2,6,6-tetramethyl-4-piperidinyl) sebacate and 0.5 parts by weight of bis-methylene aminocyanoacrylate ester. The granulates were subsequently heated to 300°C and molded to form 4" x 8" x 1/8" stabilized polymer composition plates.

The data in the following table has been compiled to demonstrate the new and unexpected superior properties of the compositions of the instant invention. Said new and unexpected superior properties are the result of the synergistic effect of the hindered amines and ultraviolet light absorbing agents in the compositions.

**Table**

| Entry^{A} | Hindered Amine | Ultraviolet Light Absorbing Agent | Total Color change After Time^{B} | | |
|---|---|---|---|---|---|
| | | | 100 hrs | 300 hrs | 500 hrs |
| 1 | No | No | 3.0 | 7.9 | 8.8 |
| 2 | Yes | No | 1.0 | 3.8 | 4.6 |
| 3 | Yes | Yes | 0.67 | 2.0 | 3.8 |

| | | | | | |
|---|---|---|---|---|---|
| ^{A}All entries were prepared in the manner similar to the one described in the example. | | | | | |
| ^{B}Total color change is based on the CIE LAB Test (DIN 6174) after 100, 300 and 500 hours of exposure of the polymer composition plates to ultraviolet light in a Xenotest 1200 apparatus. | | | | | |

## Claims

1. A polymer composition resistant to ultraviolet light comprising:
(a) at least one hindered amine;
(b) a bis-alkylene aminocyanoacrylate ester;
and
(c) a polymer selected from the group consisting of polycarbonates, polyesters, acrylics, acrylonitrile-butadiene-styrene copolymers, acrylonitrilestyrene copolymers, polyvinyl chloride, polystyrene, butyrates and polyethylene.

2. A polymer composition in accordance with claim 1 wherein said hindered amine has the formula 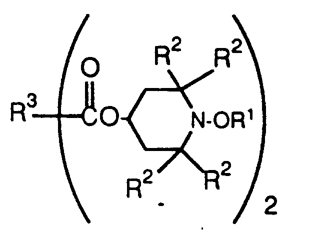 and R¹ is a C₄₋₁₂ alkyl, each R² is independently a C₁₋₅ primary alkyl and R³ is a C₄₋₁₂ alkylene.

3. A polymer composition in accordance with claim 2 wherein said hindered amine is bis(1-octyloxy-2,2,6,6-tetramethyl-4-piperidinyl)sebacate.

4. A polymer composition in accordance with claim 1 wherein said bis-alkylene aminocyanoacrylate ester has the formula 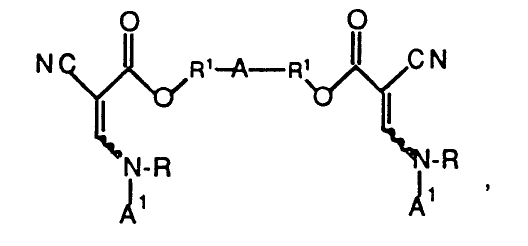 wherein A is a monocyclic or polycyclic alkane and each A¹ is independently a substituted or unsubstituted aromatic radical and each R is independently a C₁₋₅ alkyl group and each R¹ is independently propylene or butylene.

5. A polymer composition in accordance with claim 4 wherein A is cyclohexane and A¹ is a phenyl group and R is hydrogen and R¹ is methylene.

6. A polymer composition in accordance with claim 1 wherein said polycarbonate is a homopolycarbonate.

7. A polymer composition in accordance with claim 1 wherein said polycarbonate is a copolycarbonate.

8. A polymer composition in accordance with claim 1 wherein said polycarbonate comprises structural units of the formula 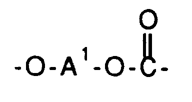 and A¹ is a divalent substituted or unsubstituted aliphatic, alicyclic or aromatic radical.

9. A polymer composition in accordance with claim 8 wherein A¹ is A²-Y-A³ and A² and A³ are each independently a macrocyclic divalent aromatic radical and Y is a bridging radical.

10. A polymer composition in accordance with claim 9 wherein said polycarbonate is bisphenol A polycarbonate.

11. A polymer composition in accordance with claim 1 wherein said polyester is a poly(alkylene dicarboxylate).

12. A polymer composition in accordance with claim 11 wherein said polyester is poly(1,4-butylene terephthalate).

13. A polymer composition in accordance with claim 1 wherein said blend comprises polycarbonates and polyesters.

14. A polymer composition in accordance with claim 13 wherein said blend comprises bisphenol A polycarbonates and poly(1,4-butylene terephthalate) in a weight ratio of about 99:1 to about 1:99.

15. A polymer composition in accordance with claim 13 wherein said blend comprises bisphenol A polycarbonate and poly(1,4-butylene terephthalate) in a weight ratio of about 90:10 to about 10:90.

16. A polymer composition in accordance with claim 13 wherein said blend comprises bisphenol A polycarbonate and poly(1,4-butylene terephthalate) in a weight ratio of about 75:25 to about 25:75.

17. A polymer composition in accordance with claim 1 wherein said hindered amine comprises less than about 2.0% by weight based on total weight of the polymer in said composition.

18. A polymer composition in accordance with claim 17 wherein said hindered amine comprises less than about 0.6% by weight based on total weight of the polymer in said composition.

19. A polymer composition in accordance with claim 1 wherein said bis-alkylene aminocyanoacrylate ester comprises less than about 2.0% by weight based on total weight of the polymer in said composition.

20. A polymer composition in accordance with claim 19 wherein said bis-alkylene aminocyanoacrylate ester comprises less than about 0.6% by weight based on total weight of the polymer in said composition.

21. A polymer composition in accordance with claim 1 wherein said acrylic is poly(methyl methacrylate).
